# EUROPÄISCHE PATENTSCHRIFT

(11) **EP 3 656 203 B1**
(45) Veröffentlichungstag und Bekanntmachung des Hinweises auf die Patenterteilung: **19.01.2022**
(21) Anmeldenummer: 19204399.0
(22) Anmeldetag: 21.10.2019
(51) Int. Cl.: A01D 90/14

(54) **LANDWIRTSCHAFTLICHE ERNTEMASCHINE**
AGRICULTURAL HARVESTING MACHINE
MASCHINE AGRICOLE DE RÉCOLTE

(30) Priorität: 23.11.2018 DE 102018129598
(43) Veröffentlichungstag der Anmeldung: 27.05.2020
(60) Teilanmeldung: 21153238.7
(73) Patentinhaber: PÖTTINGER Landtechnik GmbH, 4710 Grieskirchen (AT)
(72) Erfinder: Pfeiffer, Stefan, 4710 Grieskirchen (AT); Würzl, Andreas, 4710 Grieskirchen (AT); Prechtl, Wolfgang, 4710 Grieskirchen (AT); Weissenböck, Thomas, 4710 Grieskirchen (AT); Hehenberger, Robert, 4710 Grieskirchen (AT); Harrer, Martin, 4710 Grieskirchen (AT)
(74) Vertreter: Thoma, Michael

(56) Entgegenhaltungen:
- WO-A1-2011/047992
- DE-A1-102012 101 807
- DE-B- 1 160 229
- US-A- 4 171 180
- US-A1- 2013 140 098
- US-A1- 2014 105 710

## Beschreibung

Die vorliegende Erfindung betrifft eine landwirtschaftliche Erntemaschine, insbesondere Ladewagen, mit zumindest einem Arbeitsaggregat, das über einen Antriebsstrang von einem Schlepper her antreibbar ist, wobei der Antriebsstrang eine an den Schlepper ankuppelbare Gelenkwelle, die ein eingangsseitiges, zentrales Antriebselement des Antriebsstrangs antreibt, sowie zumindest eine Riemenstufe umfasst, die sich quer zur Fahrtrichtung und quer zur Gelenkwelle erstreckt.

DE1160229 A zeigt beispielsweise eine landwirtschaftliche Erntemaschine, bei der ein Kettentrieb von der zentralen Gelenkwelle quer zu einem seitlich angeordneten Verzweigungsgetriebe führt. Einen ähnlichen Kettentrieb zeigt die US 2014/0105710, wobei dort im Kettenantrieb noch eine Riemenstufe mit einem manuell betätigbaren Riemenspanner zugeordnet ist. Diese Druckschrift zeigt die Merkmale des Oberbegriffs des Anspruchs 1.

Eine selbstfahrende Erntemaschine mit diversen Riementriebstufen zeigt die DE 10 2012 101 807 A1. Bei diversen Erntemaschinen erfolgt der Antrieb der Arbeitsaggregate mittels eines mechanischen Antriebsstrangs vom Schlepper her, an dessen Zapfwelle eine Gelenkwelle angeschlossen wird, die ein zentrales, eingangsseitiges Antriebselement an der Erntemaschine antreibt. Dieses zentrale Antriebselement, das mit dem erntemaschinenseitigen Ende der Gelenkwelle verbunden ist bzw. davon angetrieben wird, sitzt üblicherweise etwa mittig am Maschinenrahmen der Erntemaschine oder einem damit verbundenem Trägerteil, sodass die Gelenkwelle zumindest näherungsweise in Fahrtrichtung zum Schlepper verlaufen kann.

Um den Antriebsstrang von dem zentralen Antriebselement in Form des Gelenkwellen-Anschlusses weiter zu den Arbeitsaggregaten zu führen, zweigt der Antriebsstrang vom Ende der Gelenkwelle üblicherweise quer ab, um dann seitlich an der Erntemaschine weitergeführt zu werden und entsprechende Arbeitsaggregate anzutreiben. Bei Erntemaschinen wie beispielsweise einem Ladewagen oder einer Ballenpresse kann der Antriebsstrang einerseits eine Aufsammelvorrichtung antreiben, die eine Pickup mit einer Stachelwalze und einen nachgeordneten Förderrotor umfassen kann, wobei durch eine Weiterführung des Antriebsstrangs weitere Arbeitsaggregate wie beispielsweise ein Kratzboden oder Dosierwalzen am Heck der Erntemaschine oder Elemente der Ballenformkammer angetrieben werden können.

Um den Antriebsstrang vom zentralen Antriebselement am erntemaschinenseitigen Ende der Gelenkwelle zur Seite der Erntemaschine zu führen und von dort weiter zu den entsprechenden Arbeitsaggregaten, werden üblicherweise Winkelgetriebe oder T-Getriebe verwendet. Beispielsweise kann das genannte, zentrale Antriebselement am Ende der Gelenkwelle die Eingangswelle eines T-Getriebes oder eines Winkelgetriebes sein, dessen Ausgangswelle dann über eine weitere Gelenkwelle auf ein seitliches Winkelgetriebe gegeben wird, um von dort aus über weitere Getriebestufen und Gelenkwellen den Antriebsstrang zu den Arbeitsaggregaten zu führen.

Einen solchen Ladewagen zeigt beispielsweise die Schrift DE 41 24 145 C2, wobei das seitlich angetriebene Winkelgetriebe eine Riemenstufe antreibt, welche wiederum den Förderrotor zwischen Pickup und Speicherraum des Ladewagens antreibt. An dem Riemenspanner der besagten Riemenstufe ist ein Kraftmesser angebracht, dessen Belastungssignal von einem Steuergerät des Ladewagens dazu genutzt wird, bei zu großen Lasten das Schneidwerk auszuschwenken und einen Kratzbodenantrieb anzustellen und bei dann immer noch nicht nachlassenden Belastungen den Zapfwellenantrieb des Schleppers abzustellen. Hierbei berücksichtigt das Steuergerät gleichzeitig auch noch Drucksignale von der Vorderwand und von der Heckklappe des Erntegutspeichers.

Durch die diversen Getriebestufen erfordert ein solcher Antriebsstrang eine relativ aufwendige Wartung mit vielen Schmierstellen und Lagern, die schwer zu erreichen sind. Zudem ergeben sich relativ hohe Herstellkosten.

Eine weitere Problematik ergibt sich bei solchen mechanischen Antriebssträngen dann, wenn verschiedene Arbeitsaggregate angetrieben werden, die aber nicht immer gleichzeitig laufen sollen. Beispielsweise werden üblicherweise die Dosierwalzen eines Ladewagens nicht immer zeitparallel mit dem Rotor oder der Stachelwalze der Aufsammelvorrichtung betrieben. Auch der Kratzbodenantrieb wird nur bisweilen eingeschaltet, während der Aufsammelrotor über längere Phasen läuft. Das hierdurch nötige Ein- und Auskuppeln erfordert es üblicherweise, die Schlepperzapfwelle stillzusetzen, um einfache, formschlüssig arbeitende Kupplungen schalten zu können, da andernfalls aufwendige, reibschlüssige Kupplungen notwendig wären.

Der vorliegenden Erfindung liegt daher die Aufgabe zugrunde, eine verbesserte landwirtschaftliche Erntemaschine der genannten Art zu schaffen, die Nachteile des Standes der Technik vermeidet und letzteren in vorteilhafter Weise weiterbildet. Insbesondere soll ein kostengünstiger, einfach zu wartender Antriebsstrang geschaffen werden, der mit weniger Teilen auskommt und ein einfacheres, komfortableres Zu- und Abschalten der anzutreibenden Arbeitsaggregate ermöglicht.

Erfindungsgemäß wird die genannte Aufgabe durch eine landwirtschaftliche Erntemaschine gemäß Anspruch 1 gelöst. Bevorzugte Ausgestaltungen der Erfindung sind Gegenstand der abhängigen Ansprüche.

Es wird also vorgeschlagen, den Antriebsstrang von dem zentralen Antriebselement, das den Gelenkwellen-Anschluss der Erntemaschine bilden kann und von der mit dem Schlepper kuppelbaren Gelenkwelle angetrieben wird, durch eine zentrale Riemenstufe weiterzuführen, die die Beabstandung des zentralen Antriebselements von der rechten oder linken Maschinenseite überbrückt.

Erfindungsgemäß erstreckt sich die Riemenstufe quer zur Fahrtrichtung und quer zur mit dem Schlepper kuppelbaren Gelenkwelle von dem genannten, eingangsseitigen zentralen Antriebselement zu einem Getriebeeingangselement eines seitlich an der Erntemaschine angeordneten Getriebes. Durch eine solche zentrale Riemenstufe, die im Wesentlichen noch die gesamte Antriebsleistung der Gelenkwelle vor Aufspaltung auf verschiedene Arbeitsaggregate übertragen kann, ist es nicht nur möglich, das Winkel- oder T-Getriebe am Ende der Zapf- bzw. Gelenkwelle einzusparen, sondern es kann auch in einfacher Weise ein Überlastschutz für den gesamten Antriebsstrang erzielt werden oder beispielsweise auch ein Abwürgen des Schleppers verhindert werden.

Insbesondere kann die genannte Riemenstufe in einer aufrechten Ebene quer zur Fahrtrichtung umlaufen und zumindest zwei Riemenscheiben mit zumindest näherungsweise fahrtrichtungsparallelen Drehachsen aufweisen, von denen eine etwa mittig an einem Frontabschnitt der Erntemaschine und eine andere seitlich an der Erntemaschine angeordnet sein kann. Insbesondere kann eine die Riemenstufe antreibende Riemenscheibe direkt auf einem Achsstummel sitzen, der das genannte, zentrale Antriebselement bildet und unmittelbar mit der Gelenkwelle gekoppelt sein kann, die zum Schlepper führt, sodass die Drehzahl der anzutreibenden Riemenscheibe der Drehzahl der Gelenkwelle entspricht. Die genannte antreibende Riemenscheibe kann koaxial zum ausgangsseitigen Gelenk, genauer gesagt des Abtriebs der abtriebsseitigen Gelenkhälfte der Gelenkwelle und/oder koaxial zum Gelenkwellen-Anschluss der Erntemaschine angeordnet sein. Hierdurch kann das übliche Winkel- oder T-Getriebe am Ende der Gelenkwelle gänzlich eingespart und nur ein einfacher Achsstummel vorgesehen werden.

Grundsätzlich wäre es aber auch möglich, zwischen der genannten Gelenkwelle und der Riemenstufe noch eine untersetzende oder übersetzende Getriebestufe vorzusehen, beispielsweise in Form eines Stirnradpaares.

Die genannte Riemenstufe überbrückt zumindest näherungsweise die halbe Maschinenbreite der Erntemaschine.

Die Riemenstufe wird nach der vorliegenden Erfindung dazu genutzt, den Antriebsstrang in einfacher Weise von der Antriebsbewegung der Gelenkwelle abzukoppeln und einen Überlastschutz zu realisieren. Vorteilhafterweise umfasst die genannte Riemenstufe einen aktiv verstellbaren Riemenspanner, der von einer Steuervorrichtung zwischen einer Spannstellung, in der die Riemenstufe gespannt und der Kraftfluss geschlossen ist, und einer Entspannstellung, in der die Riemenstufe den Antriebsstrang von der zum Schlepper führenden Getriebewelle abkoppelt, verstellbar ist. Wird der Riemenspanner von der Steuereinrichtung in die genannte Entspannstellung verstellt, ist der Kraftfluss zwischen der antreibenden Riemenscheibe und der abtreibenden Riemenscheibe unterbrochen, sodass auch bei weiterlaufender Zapfwelle des Schleppers die hinter bzw. stromab der Riemenstufe liegenden Arbeitsaggregate stillgesetzt sind. Die Verstellung des Riemenspanners kann mittels eines geeigneten Aktors beispielsweise in Form eines Druckmittelzylinders erfolgen, der von der Steuervorrichtung ansteuerbar ist.

Die genannte Steuereinrichtung kann hierbei grundsätzlich in verschiedener Weise arbeiten und/oder in verschiedener Weise einen Überlastschutz realisieren.

In vorteilhafter Weiterbildung der Erfindung kann die Steuereinrichtung den genannten Riemenspanner in die Entspannstellung verbringen und hierdurch den Kraftfluss unterbrechen, wenn eine Belastung des Antriebsstrangs und/oder eines vom Antriebsstrang angetriebenen Arbeitsaggregats einen vorbestimmten Schwellwert überschreitet. Vorteilhafterweise kann eine Lasterfassungseinrichtung zum Erfassen eines Drehmoments und/oder einer Belastung des Antriebsstrangs und/oder eines Arbeitsaggregats vorgesehen sein, wobei die Steuereinrichtung dazu ausgebildet ist, in Abhängigkeit eines Lastsignals der genannten Lasterfassungseinrichtung, welches das Erreichen und/oder Überschreiten eines Lastschwellwerts anzeigt, den genannten Riemenspanner in die Entspannstellung zu verbringen.

Beispielsweise kann die Lasterfassungseinrichtung eine Lagerabstützkraft und/oder ein Lagerkippmoment erfassen, mit der bzw. mit dem eine Riemenscheibe des Riementriebs abgestützt wird. Dies geht von der Überlegung aus, dass bei hohen Belastungen des Antriebsstrangs hohe Belastungen auf die Riemenscheibe wirken und dementsprechend die Lagerreaktionskräfte und/oder -momente ansteigen.

Um die Erfassung zu erleichtern, kann eine der Riemenscheiben, insbesondere die antreibende Riemenscheibe der Riemenstufe auch beweglich gelagert sein, beispielsweise auf einer Wippe oder einem Schwenkarm. Die Lasterfassungseinrichtung kann dabei einen Kraftmesser und/oder einen Wegmesser zum Messen einer Auslenkkraft und/oder eines Auslenkwegs der Riemenscheibe bzw. der genannten Wippe bzw. des genannten Schwenkarms aufweisen. Die Auslenkung der Riemenscheibe bzw. die entsprechende Bewegung der Wippe oder des Schwenkarms nimmt bei zunehmender Belastung des Antriebsstrangs zu, sodass die genannte Auslenkung und/oder Auslenkkraft als Maß für das übertragene Drehmoment genommen werden kann. Beispielsweise kann ein Kraftmessbolzen die auf die Wippe wirkende Kraft messen.

Alternativ oder zusätzlich kann die Lasterfassungseinrichtung auch eine Stellund/oder Reaktionskraft auf den verstellbaren Riemenspanner erfassen und ein entsprechendes Lastsignal ausgeben, das als Belastungs- und/oder Drehmomentindikator genommen werden kann.

Überschreitet das entsprechende Lastsignal einen vorbestimmten Schwellwert, kann die Steuereinrichtung den Riemenspanner lösen, um eine Überlastung zu verhindern.

Um auf Überlastsituationen ausreichend schnell reagieren zu können, kann es vorteilhaft sein, die auf den Antriebsstrang wirkende Last und/oder das dort auftretende Drehmoment mittels DMS-Technik am Antriebsstrang zu messen, wobei beispielsweise ein Dehnungsmessstreifen an der Antriebswelle des Antriebsstrangs, der zum Schlepper führt, oder an einer anderen Antriebswelle und/oder an einer Komponente, die Reaktionskräfte des im Antriebsstrang wirkenden Drehmoments und/oder der im Antriebsstrang wirkenden Last abstützt, angebracht werden kann. Eine solche Komponente kann beispielsweise ein Drehlager sein, welches einen Antriebswellenteil abstützt und Reaktionskräfte einer Verzahnungsstufe und/oder eines Riemenspanners abfängt. Alternativ oder zusätzlich kann die genannte Lasterfassungseinrichtung auch einen Kraftmessbolzen umfassen, der eine Riemenscheibe oder ein Kettenrad einer Riemen- oder Kettenstufe drehbar lagert und gleichzeitig die über den Riemen oder die Kette übertragene Kraft misst.

Insbesondere ist die Lasterfassungseinrichtung, beispielsweise in Form des zumindest einen Dehnungsmessstreifens oder des Kraftmessbolzens derart angeordnet und/oder einer Antriebsstrangkomponente derart zugeordnet, dass die gemessene Größe zumindest näherungsweise proportional zum Antriebsmoment und/oder der auf den Antriebsstrang wirkenden Last ist.

Die Auswertung des Messsignales kann digital oder analog erfolgen. Beispielsweise kann das Messsignal von einer elektronischen Steuereinrichtung, beispielsweise einem am Anbaugerät vorhandenen Jobrechner, ausgewertet, insbesondere auf Erreichen und/oder Überschreiten eines Schwellwerts überprüft werden, sodass die elektronische Steuereinrichtung bei Feststellen einer Überlastsituation auf Basis des Messsignals ein Unterbrechen des Antriebsstrangs veranlassen kann.

Gegebenenfalls kann aber auch eine analoge Auswertung des Messsignals erfolgen, was gegebenenfalls noch schneller sein kann als die Auswertung durch eine elektronische Steuereinrichtung. Beispielsweise kann das Messsignal des Dehnungsmessstreifens und/oder des Kraftmessbolzens in einen Komparator gegeben werden, der eine Messsignalspannung mit einer Referenzspannung vergleichen kann, wobei die Referenzspannung des Komparators vorteilhafterweise von einer Steuereinrichtung, beispielsweise dem Jobrechner vorgegeben bzw. variiert werden kann, um das Auslösemoment bzw. die Auslöselast variabel festlegen zu können.

Gegebenenfalls kann das Messsignal des Dehnungsmessstreifens und/oder des Kraftmessbolzens durch einen Vorverstärker gegeben werden, bevor es in den Komparator geleitet wird, um den Komparator in einen funktionellen Arbeitspunkt betreiben zu können.

Dem Komparator kann beispielsweise ein RS-Glied nachgeordnet sein, um bei einem einmaligen Überschreiten des maximalen Moments eine dauerhafte Bestromung eines nachgeordneten Relais zu erzielen, das dann die Trennung des Antriebsstrangs bzw. dessen Unterbrechung veranlasst. Vorteilhafterweise kann dem genannten Relais ein Stromverstärker beispielsweise in Form eines Bipolartransistors zugeordnet bzw. vorgeschaltet sein, um das vom Komparator bzw. RS-Glied her kommende Schaltsignal verstärkt auf das Relais durchschalten zu können.

Um den Schaltvorgang selbst, welcher den Drehmoment- bzw. Kraftfluss des Antriebsstrangs unterbricht, rasch umsetzen zu können, kann es vorteilhaft sein, einen Hydraulikaktor zu verwenden, der in einem druckbeaufschlagten Zustand den Drehmoment- und/oder Kraftfluss im Antriebsstrang sicherstellt, beispielsweise die genannte Riemenstufe schließt bzw. spannt, und dem Hydraulikaktor ein Schaltventil zuzuordnen, welches es ermöglicht, den Hydraulikaktor rasch drucklos zu schalten und/oder dem Druckaktor rasch das Abströmen des Druckfluids zu ermöglichen. Das genannte Schaltventil kann auf ein Schaltsignal der elektronischen Steuereinrichtung und/oder des analogen Schaltkreises rasch reagieren bzw. schlagartig öffnen, sodass der Hydraulikaktor sehr rasch drucklos geschaltet wird und Druckfluid abströmen kann, wodurch der Antriebsstrang unterbrochen wird.

Der genannte Hydraulikaktor kann insbesondere dem zuvor erläuterten Riemenspanner zugeordnet sein, um diesen in die spannende Stellung zu treiben.

Wird das Schaltventil in einer Überlastsituation betätigt, wird der Hydraulikaktor, beispielsweise in Form eines Hydraulikzylinders, kraftlos und die Riemenspannung geht schlagartig zurück, sodass der Riementrieb durchrutschen kann. Grundsätzlich ist es aber auch denkbar, den genannten Hydraulikaktor zum Spannen bzw. Einrücken einer mechanischen Kupplung beispielsweise in Form einer Reibkupplung zu verwenden, um beim Lösen eine solche mechanische Kupplung zu trennen. Grundsätzlich ist die beschriebene elektrische Überlastsicherung auch unabhängig der beschriebenen Riemenantriebsstufe sinnvoll einsetzbar, um in Überlastsituationen sehr rasch den Antriebsstrang zu unterbrechen.

Alternativ oder zusätzlich zu einer solchen Drehmomenterfassung und drehmomentgesteuerten Riemenentspannung kann die Steuereinrichtung auch dazu ausgebildet sein, in Abhängigkeit eines an der Riemenstufe auftretenden Schlupfs zu arbeiten.

Vorteilhafterweise kann hierzu eine Schlupferfassungseinrichtung vorgesehen sein, die zumindest zwei Drehzahlsensoren aufweisen kann, mithilfe derer die Drehzahl der antreibenden Riemenscheibe und die Drehzahl der abtreibenden Riemenscheibe der Riemenstufe erfasst werden können. Die genannte Steuereinrichtung kann dazu ausgebildet sein, eine Differenz der beiden Drehzahlen zu überwachen und/oder mit einem zulässigen Schwellwert zu vergleichen. Wird die Differenz der Drehzahlen und damit ein Schlupf zu groß, kann die Steuereinrichtung den genannten Riemenspanner lösen.

Um die Antriebsleistung von der mit dem Schlepper kuppelbaren Gelenkwelle, insbesondere von der genannten Riemenstufe zu mehreren Arbeitsaggregaten zu übertragen, kann der weitere Antriebsstrang grundsätzlich verschieden ausgebildet sein.

Um ein erstes Arbeitsaggregat mit einer vorzugsweise liegenden Antriebsachse quer zur Fahrtrichtung anzutreiben, findet ein Winkelgetriebe Verwendung. Um gleichzeitig auch noch ein zweites, vom ersten beabstandetes Arbeitsaggregat antreiben zu können, und dabei mit möglichst wenigen Teilen auszukommen, umfasst ein Triebling der Winkelstufe eine durchgehende Welle, die eingangsseitig die Antriebsleistung empfängt, ein Winkelgetriebeelement antreibt und sodann abtriebsseitig ein Antriebselement bildet, welches zum Antreiben des zweiten Arbeitsaggregats dient. Insbesondere kann die genannte durchgängige Welle in einem mittleren Abschnitt ein Antriebsritzel oder -rad zum Antreiben des quer abgehenden Winkelgetriebeelements aufweisen und an seinen gegenüberliegenden Enden einerseits einen drehmomentempfangenden Abschnitt und andererseits einen drehmomentabgebenden Abschnitt aufweisen, wobei die genannten drehmomentempfangenden bzw. -abgebenden Abschnitte beispielsweise von einem Keilwellenprofilabschnitt oder einem drehfest befestigten Getrieberad oder -ritzel gebildet sein können.

Bei Ausbildung der Erntemaschine als Ladewagen, kann das genannte Winkelgetriebe insbesondere einen Rotor der Aufsammelvorrichtung, der einer rotierenden Stachelwalze der Pickup nachgeordnet sein kann, antreiben. Die genannte durch die Winkelgetriebestufe hindurchgehende Durchtriebswelle kann eingangsseitig von der zuvor erläuterten Riemenstufe angetrieben werden und abtriebsseitig beispielsweise zu Dosierwalzen am Heck des Ladewagens bzw. einer weiteren Getriebestufe, die mit den besagten Dosierwalzen in Antriebsverbindung steht, geführt sein.

Durch die Verwendung eines solchen Winkelgetriebes mit Durchtrieb kann es vorteilhafterweise ausreichend sein, wenn die genannte Riemenstufe nur eine abtreibende Riemenscheibe antreibt und/oder nur eine Getriebewelle von der Riemenstufe angetrieben wird, wodurch sich die Ausbildung der Riemenstufe nochmals weiter vereinfacht. Insbesondere kann die Riemenstufe nur zwei Riemenscheiben und gegebenenfalls den genannten Riemenspanner aufweisen.

Zusätzlich zu einem solchen Seitengetriebe mit Durchtrieb kann ein weiteres Arbeitsaggregat, insbesondere die Dosierwalzen am Heck eines Ladewagens, aber auch durch eine separate Verzweigung des Antriebsstrangs, die nicht durch das Seitengetriebe hindurchgeht, angetrieben werden.

Beispielsweise kann die zuvor genannte Riemenstufe zwei separate abtreibende Riemenscheiben umfassen, die zwei separate Wellen antreiben, von denen eine beispielsweise zu einem den Rotor der Aufsammelvorrichtung antreibenden Winkelgetriebe gehen kann und eine andere zu einem weiteren Arbeitsaggregat bzw. einem damit verbundenem Getriebe, insbesondere Winkelgetriebe, gehen kann, wobei das genannte weitere Arbeitsaggregat insbesondere eine heckseitige Dosiervorrichtung eines Ladewagens sein kann.

Vorteilhafterweise kann die genannte Riemenstufe hierbei zwei abtreibende Riemenscheiben umfassen, die jeweils um etwa liegende, fahrtrichtungsparallele Drehachsen rotierend angeordnet sein können, wobei die beiden abtreibenden Riemenscheiben insbesondere an einer rechten oder linken Seite der Erntemaschine positioniert sein können. Vorteilhafterweise können beide abtreibenden Riemenscheiben an derselben Maschinenseite positioniert sein, wobei es jedoch auch in Betracht käme, die beiden abtreibenden Riemenscheiben der Riemenstufe auf gegenüberliegenden Seiten anzuordnen.

Beispielsweise können die beiden Riemenscheiben auf derselben Maschinenseite näherungsweise übereinander angeordnet sein.

Um einen ausreichenden Reibschluss an beiden anzutreibenden Riemenscheiben gleichermaßen zu erreichen, kann zwischen den beiden anzutreibenden Riemenscheiben eine Umlenkscheibe vorgesehen sein, die den Riemen auf einer S- bzw. schlangenförmigen Bahn um die beiden anzutreibenden Riemenscheiben und die dazwischenliegende Umlenkscheibe zwingt.

Um eine Verzweigung der Antriebsleistung zu erzielen und zwei separate Antriebswellen anzutreiben, muss der Riemen des Riementriebs aber nicht zwangsweise nacheinander um die zwei antreibenden Riemenscheiben laufen. In Weiterbildung der Erfindung kann auch eine zweite, separate Riemenstufe vorgesehen sein, die von der ersten Riemenstufe her angetrieben wird. Insbesondere kann die abtreibende Riemenscheibe der ersten Riemenstufe eine Welle antreiben, auf der die antreibende Riemenscheibe der zweiten Riemenstufe sitzen kann, wobei die genannte Welle, die die antreibende Riemenscheibe der zweiten Riemenstufe antreibt, gleichzeitig als Getriebeeingangswelle und/oder als antreibende Welle für das seitlich positionierte Winkelgetriebe zum Antreiben des ersten Arbeitsaggregats genutzt werden kann.

Bei Verwendung einer solchen zweiten Riemenstufe kann der zuvor erläuterte, von einer Steuervorrichtung verstellbare Riemenspanner an der genannten ersten Riemenstufe, aber auch an der genannten zweiten Riemenstufe vorgesehen sein. Im erstgenannten Fall wird eine zentrale Abschaltung bzw. ein zentrales Unterbrechen des Kraftfluss erreicht, durch das beide Arbeitsaggregate gleichermaßen abgeschaltet werden können, auch wenn die Schlepperzapfwelle durchläuft. Im zweitgenannten Fall, das heißt einem Riemenspanner an der zweiten Riemenstufe kann selektiv das zweite Arbeitsaggregat abgeschaltet werden, auch wenn das erste Arbeitsaggregat über die erste Riemenstufe noch angetrieben wird.

In vorteilhafter Weiterbildung der Erfindung können auch beide Riemenstufen jeweils mit einem solchen durch eine Steuervorrichtung verstellbaren Riemenspanner zwischen einer kraftübertragenden und einer nichtkraftübertragenden Stellung geschaltet werden. Dies erlaubt es einerseits, eine zentrale Abschaltung aller Arbeitsaggregate und insbesondere auch eine zentrale Überlastsicherung zu erreichen. Andererseits kann beispielsweise der Dosierantrieb eines Ladewagens selektiv zugeschaltet und abgeschaltet werden.

Alternativ oder zusätzlich zu einer solchen zweiten Riemenstufe kann eine weitere, zu einem weiteren Arbeitsaggregat führende Antriebswelle auch von einem zusätzlichen Winkelgetriebe her angetrieben werden.

Die Erfindung wird nachfolgend anhand bevorzugter Ausführungsbeispiele und zugehöriger Zeichnungen näher erläutert. In den Zeichnungen zeigen:
- Fig. 1:: eine Seitenansicht einer landwirtschaftlichen Erntemaschine in Form eines Ladewagens nach einer vorteilhaften Ausführung der Erfindung,
- Fig. 2:: eine perspektivische Darstellung der Riemenstufe des Antriebsstrangs der Erntemaschine aus Figur 1, die zwischen der an den Schlepper anschließbaren Gelenkwelle und dem Winkelgetriebe zum Antreiben des Rotors der Aufsammelvorrichtung angeordnet ist,
- Fig. 3:: eine Frontansicht der Riemenstufe des Antriebsstrangs und deren Anordnung an einer Vorderseite der Erntemaschine aus den vorhergehenden Figuren,
- Fig. 4:: eine Schnittansicht entlang der Linie A-A in Figur 3,
- Fig. 5:: eine teilweise freigeschnittene Seitenansicht der Erntemaschine aus den vorhergehenden Figuren, die das Winkelgetriebe zum Antreiben des Förderrotors und dessen Durchtrieb zum Antreiben eines heckseitigen Dosierers zeigt,
- Fig. 6:: eine teilweise freigeschnittene Seitenansicht auf das Winkelgetriebe und dessen Durchtrieb ähnlich Figur 5, wobei eine Kupplung zum Schalten des Durchtriebs nach einer Variante im Bereich des Winkelabtriebs angeordnet ist,
- Fig. 7:: eine Draufsicht auf die Riemenstufe des Antriebsstrangs ähnlich Figur 3, wobei die Riemenstufe 2 abtreibende Riemenscheiben zum Antreiben zweier separater Wellen des Antriebsstrangs umfasst,
- Fig. 8:: eine ausschnittsweise Seitenansicht auf die Erntemaschine aus den vorhergehenden Figuren, die die beiden Wellen des Antriebsstrangs zeigt, die von der Riemenstufe gemäß Figur 7 angetrieben werden,
- Fig. 9:: eine ausschnittsweise Seitenansicht auf die Erntemaschine aus den vorhergehenden Figuren, die eine Verzweigung des Antriebsstrangs mittels einer zweiten Riemenstufe zeigt,
- Fig. 10:: eine Draufsicht auf die beiden Riemenstufen an einer Vorderseite der Erntemaschine ähnlich Figur 3, wobei die beiden separaten Riemenspanner für die beiden Riemenstufen gezeigt sind,
- Fig. 11:: eine ausschnittsweise Seitenansicht der Erntemaschine, die eine Verzweigung des Antriebsstrangs mithilfe eines zusätzlichen Stirnradgetriebes zeigt, das von der Riemenstufe her angetrieben wird,
- Fig. 12:: eine Draufsicht auf die Riemenstufe an der Vorderseite der Erntemaschine und die davon angetriebene zusätzliche Stirnradgetriebestufe,
- Fig. 13:: eine Seitenansicht der landwirtschaftlichen Erntemaschine und der im Antriebsstrang zwischen Schlepper und Anbaugerät vorgesehenen Überlastsicherung zum Unterbrechen des vom Antriebsstrang übertragenen Drehmoments,
- Fig. 14:: eine Elektronikschaltung zur Auswertung des Messsignals der Lasterfassungseinrichtung und Betätigung der Überlastsicherung,
- Fig. 15:: eine Darstellung des Hydraulikaktors des Riemenspanners und des diesem zugeordneten Schaltventils zum Unterbrechen des Antriebsmoments der Riemenstufe nach einer Ausführungsform der Erfindung, gemäß der der Riemenspanner durch einen einfach wirkenden Hydraulikzylinder gespannt wird, und
- Fig. 16:: eine Darstellung eines doppelt wirkenden Hydraulikaktors zum Spannen des Riemenspanners, und des dem Hydraulikaktor zugeordneten Schaltventils zum Unterbrechen des Antriebsmoments.

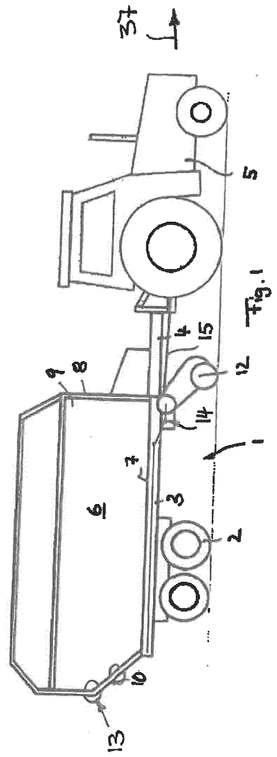

Wie Figur 1 zeigt, kann die landwirtschaftliche Erntemaschine 1 ein Anbaugerät sein, das an einen Schlepper 5 anbaubar ist, um von diesem gezogen oder geschoben zu werden. Insbesondere kann die Erntemaschine 1 beispielsweise als Ladewagen oder auch als Ballenpresse ausgebildet sein.

Die Erntemaschine 1 kann einen Maschinenrahmen 3 umfassen, der von einem Fahrwerk 2 am Boden abgestützt ist, und über eine Anbauvorrichtung insbesondere in Form einer Deichsel 4 an den Schlepper 5 angekuppelt werden kann.

Der genannte Maschinenrahmen 3 kann beispielsweise einen Erntegutspeicher 6 tragen, der von Seitenwänden 9, einer Frontwand 8 und einer Heckwand 10 begrenzt sein kann.

Die Erntemaschine 1 umfasst mehrere Arbeitsaggregate, die von einem Antriebsstrang vom Schlepper 5 her angetrieben werden, wie noch erläutert wird.

Insbesondere kann die Erntemaschine 1 eine Aufsammelvorrichtung 12 zum Aufsammeln von Erntegut vom Boden umfassen, wobei der genannte Aufsammler 12 insbesondere eine Pickup mit umlaufenden Stacheln bzw. einer Stachelwalze sowie einem nachgeordneten Förderrotor 11 aufweisen kann, der sich liegend quer zur Fahrtrichtung erstrecken kann, um das aufgesammelte Erntegut in den Erntegutspeicher 6 befördern zu können.

Ist die Erntemaschine 1 als Ladewagen ausgebildet, kann als weiteres Arbeitsaggregat ein Kratzboden 7 vorgesehen sein, mittels dessen im Erntegutspeicher 6 gesammeltes Erntegut zu einem Dosierer 13 am Heck des Erntegutspeichers 6 befördert werden kann.

Der Kratzboden 7 sowie der Dosierer 13 können vorteilhafterweise ebenso wie der Aufsammler 12 einschließlich dessen Förderrotor 11 von einer Zapfwelle des Schleppers 5 her über einen mechanischen Antriebsstrang 14 angetrieben werden.

Der genannte Antriebsstrang 14 kann zunächst eine Gelenkwelle 15 umfassen, die von der Zapfwelle des Schleppers 5 her zu einem zentralen Antriebselement 16 verläuft, das am Maschinenrahmen 3 der Erntemaschine 1 oder einem damit verbundenen Träger etwa mittig an einer Vorderseite der Erntemaschine 1 gelagert sein kann. Das genannte zentrale Antriebselement 16 kann insbesondere ein Antriebswellenstummel sein, der einerseits einen Gelenkwellen-Anschluss bilden kann und mit der Gelenkwelle 15 drehfest verbunden ist und andererseits eine Riemenscheibe 18 einer Riemenstufe 17 antreibt.

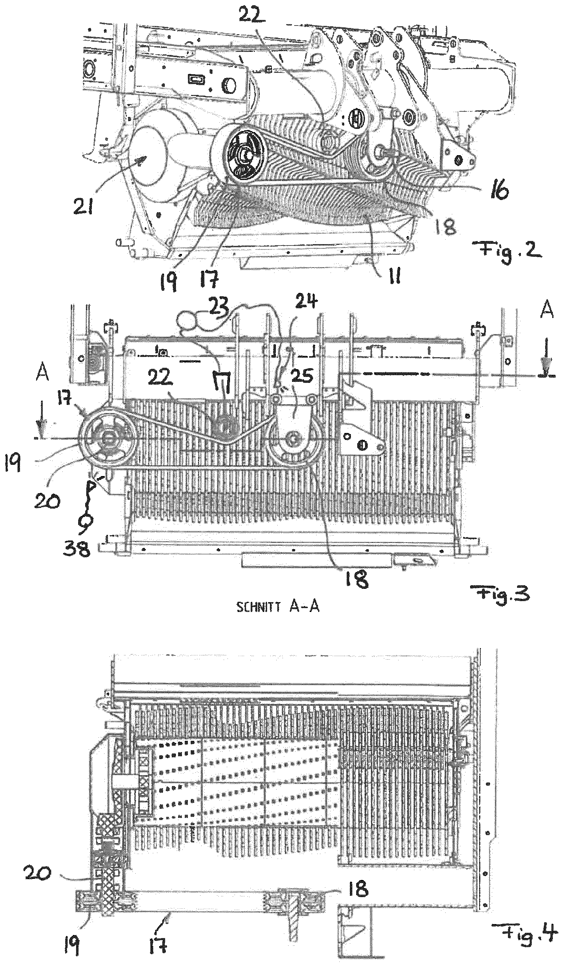

Wie die Figuren 2 und 3 zeigen, kann das genannte zentrale Antriebselement 16 etwa mittig an einer Front der Erntemaschine 1, beispielsweise oberhalb des Aufsammlers 12 angeordnet sein, wobei sich der Achsstummel etwa fahrtrichtungsparallel erstrecken kann.

Die anschließende Riemenstufe 17 kann einen oder auch mehrere parallele Riemen umfassen, die um zumindest zwei Riemenscheiben umlaufen, von denen eine die Riemenstufe 17 antreibt und die andere als Abtriebselement fungiert. Die beiden Riemenscheiben 18 und 19 können vorteilhafterweise um liegende, näherungsweise fahrtrichtungsparallele Drehachsen umlaufen, so dass sich die Riemenstufe in einer aufrechten Ebene quer zur Fahrtrichtung und/oder quer zur Längsachse der Gelenkwelle 15 erstreckt.

Insbesondere erstreckt sich die genannte Riemenstufe 17 in näherungsweise liegender Ausrichtung quer zur Fahrtrichtung von dem zentralen Antriebselement 16 zu einem Abschnitt des Antriebsstrangs 14 an einer der beiden linken oder rechten Seiten der Erntemaschine 1.

Die beiden Riemenscheiben 18 und 19 können zumindest näherungsweise auf derselben Höhe angeordnet sein, wobei dies nicht zwingend ist.

Die antreibende Riemenscheibe 18 kann koaxial zum abtriebsseitigen Ende der Gelenkwelle 15 angeordnet sein, insbesondere auf dem genannten Antriebsstummel, der das Antriebselement 16 bildet, sitzen und mit der Drehzahl der Gelenkwelle 15 rotieren.

Die abtreibende Riemenscheibe 19 kann eine Antriebswelle 20 antreiben, die als Eingangswelle eines Seitengetriebes 21 dienen kann und/oder mit einer solchen Eingangswelle des Seitengetriebes 21 beispielsweise durch eine Gelenkwelle verbunden sein kann.

Wie Fig. 2 und Fig. 3 verdeutlicht, umfasst die Riemenstufe 17 vorteilhafterweise einen Riemenspanner 22, der verstellbar gelagert ist und durch einen geeigneten Aktor verstellt werden kann, um einerseits in eine den Riemen spannende Stellung zu verfahren, in welcher der Kraftfluss über die Riemenstufe 17 hergestellt ist, und andererseits in eine entspannte Stellung zu verfahren, in welche der Kraftfluss über die Riemenstufe 17 unterbrochen ist.

Der genannte Riemenspanner 22 kann beispielsweise eine Umlenkrolle umfassen, die auf einem Schwenkhebel gelagert ist. Zum Verstellen kann ein geeigneter Aktor beispielsweise in Form eines Druckmittelzylinders vorgesehen sein.

Um den Riemenspanner 22 zwischen seiner Spannstellung und seiner Entspannstellung zu verstellen, ist eine Steuervorrichtung 23 vorgesehen, die auf verschiedene Steuersignale reagieren kann und den Aktor ansteuert.

Um beispielsweise ein manuelles Abstellen der vom Antriebsstrang 14 angetriebenen Arbeitsaggregate vornehmen zu können, kann die Steuereinrichtung 23 einen Steuersignaleingang umfassen, über den ein Maschinenführer ein manuelles Signal - welches aber natürlich auch per Sprachsteuerung oder dergleichen eingegeben werden kann - den Antriebsstrang 14 unterbrechen und die Arbeitsaggregate von der Gelenkwelle 15 abkuppeln kann. Durch die Anordnung der Riemenstufe 17 stromauf bzw. im Kraftfluss vor den anzutreibenden Arbeitsaggregaten kann die Riemenstufe 17 als zentrale Kupplung dienen, mithilfe derer alle Arbeitsaggregate abgestellt werden können, auch wenn die Gelenkwelle 15 weiterläuft.

Alternativ oder zusätzlich kann die Steuervorrichtung 23 aber auch zumindest einen automatischen Betriebsmodus umfassen, in dem die Steuervorrichtung 23 den Riemenspanner 22 beispielsweise in Abhängigkeit eines im Antriebsstrang 14 herrschenden Drehmoments oder allgemeinen Abhängigkeit einer Last am Antriebsstrang und/oder an einem oder mehreren Arbeitsaggregaten den Riemenspanner verstellen kann. Insbesondere kann die Steuervorrichtung 23 dazu ausgebildet sein, den Riemenspanner 22 in seine Entspannstellung, in der der Kraftfluss unterbrochen ist, zu verbringen, wenn eine Last und/oder ein übertragendes Drehmoment einen Schwellwert erreicht oder überschreitet.

Die Last und/oder das genannte Drehmoment kann durch eine geeignete Erfassungseinrichtung 24 erfasst werden, die beispielsweise einen Kraftmesser besitzen kann, der auf die Lager zumindest einer der Riemenscheiben 18, 19 wirkende Lagerkräfte messen kann.

Insbesondere kann die antreibende Riemenscheibe 18, ggf. auch die abtreibende Riemenscheibe 19 beweglich gelagert sein, beispielsweise auf einer schwenkbaren Wippe oder einem schwenkbaren Lagerarm 25, wobei die Erfassungsvorrichtung 24 beispielsweise mittels eines Kraftmessbolzens oder allgemein mittels eines Kraftmessers oder eines Wegmessers eine Auslenkung oder eine Auslenkkraft auf die Riemenscheibe messen kann.

Übersteigt das auf diese Weise gemessene Drehmoment einen vorbestimmten Schwellwert, kann die Steuervorrichtung 23 den Riemenspanner 22 in seine Entspannstellung fahren, um eine Überlastung zu verhindern.

Alternativ oder zusätzlich kann die Steuervorrichtung 23 aber auch schlupfgesteuert arbeiten. Die Erfassungsvorrichtung 24 kann beispielsweise zwei Drehzahlsensoren umfassen, die die Drehzahlen der beiden Riemenscheiben 18 und 19 erfassen. Übersteigt oder erreicht die Differenz zwischen den Drehzahlen der beiden Riemenscheiben 18 und 19 einen vorbestimmten Schwellwert, kann die Steuervorrichtung 23 ebenfalls den Riemenspanner 22 betätigen und in seine Entspannstellung verfahren.

Grundsätzlich kann die Steuervorrichtung 23 und das Verstellen des Riemenspanners 22 aber auch in Abhängigkeit anderer Betriebsgrößen arbeiten. Beispielsweise kann eine Belastung des Aufsammlers 12 und/oder des Dosierers 13 erfasst und ggf. aufsummiert werden, um in Abhängigkeit der Belastung eines oder mehrerer Arbeitsaggregate die Riemenstufe 17 in ihre nicht kraftübertragende Stellung verbringen zu können.

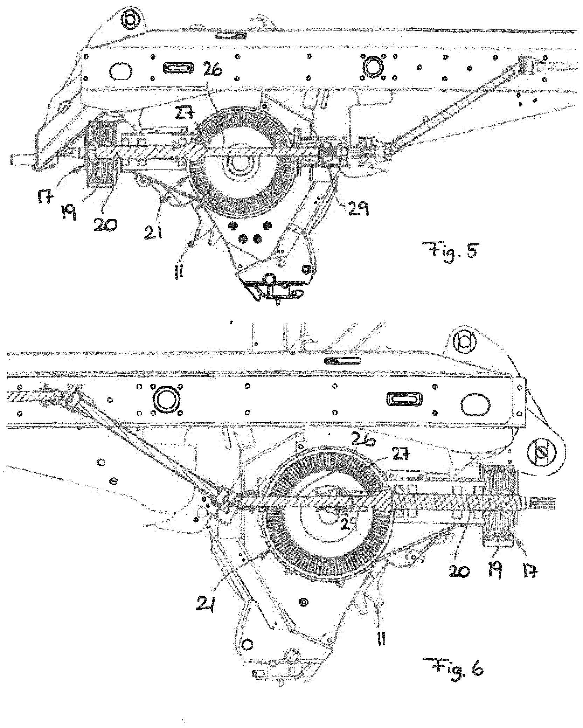

Wie die Figuren 5 und 6 zeigen, weist der Antriebsstrang 14 nach der Riemenstufe 17 ein Verzweigungsgetriebe auf, um mehrere Arbeitsaggregate antreiben zu können. Dabei ist das vorgenannte Seitengetriebe 21 als Verzweigungsgetriebe in Form eines Winkelgetriebes ausgebildet, dessen Eingangswelle sich in einer näherungsweise fahrtrichtungsparallelen, aufrechten Ebene erstreckt und dessen Abtriebswelle sich liegend quer zur Fahrtrichtung erstreckt. Beispielsweise kann ein solches Winkelgetriebe eine Kegelradstufe oder ähnliches umfassen.

Um über das direkt an das Winkelgetriebe bzw. Seitengetriebe 21 angebundene Arbeitsaggregat hinaus ein weiteres Arbeitsaggregat antreiben zu können, weist das Seitengetriebe 21 vorteilhafterweise, wie dies die Figuren 5 und 6 zeigen, einen Durchtrieb auf, der eine Welle umfassen kann, die eingangsseitig Drehmoment empfängt, sodann das Winkel- bzw. Seitengetriebe 21 antreibt, durch dieses hindurchgeht und abtriebsseitig Drehmoment abgibt. Beispielsweise kann sich die genannte Durchtriebswelle 26 seitlich an einem Getrieberad 27 beispielsweise in Form eines Tellerrads vorbei erstrecken, welches Getrieberad 27 um eine liegende, quer zur Fahrtrichtung ausgerichtete Achse dreht und beispielsweise den Förderrotor 11 des Aufsammlers 12 antreiben kann.

Die genannten Drehmoment empfangenden und Drehmoment abgebenden Abschnitte der Durchtriebswelle 26 können sich auf gegenüberliegenden Seiten des Getriebes 21 erstrecken und beispielsweise von einem Keilwellenabschnitt oder anderen Drehmoment übertragenden Kupplungs- bzw. Getriebeelementen gebildet sein.

Das Drehmoment abgebende Ende der Durchtriebswelle 26 kann beispielsweise über eine weitere Gelenkwelle 28 eine weitere Welle antreiben, die mit dem Dosierer 13 bzw. einem Dosierergetriebe in Verbindung steht und beispielsweise die Eingangswelle des besagten Dosierergetriebes bilden kann. Der genannte Dosierer 13 kann beispielsweise Dosiererwalzen am Heck des Erntegutspeichers 6 aufweisen. Dementsprechend führt der Antriebsstrang 14 von dem Seitengetriebe 21, das an einer Seite der Erntemaschine 1 im Bereich des Aufsammlers 12 angeordnet ist, zum Heck der Erntemaschine 1.

Ebenfalls denkbar wäre es aber, dass das abtriebsseitige Ende der Durchtriebswelle 26 den zuvor genannten Kratzboden 7 antreibt.

Um das zweite Arbeitsaggregat, insbesondere den genannten Dosierer 13 separat abkuppeln zu können, während das erste Arbeitsaggregat, insbesondere der Förderrotor 11, noch weiter angetrieben wird, kann der Antriebsstrang 14, insbesondere im Bereich der Durchtriebswelle 26 eine Kupplung 29 aufweisen, wobei eine solche Kupplung 29 beispielsweise im Bereich der Abtriebsseite der Durchtriebswelle 26 angeordnet sein kann, vgl. Fig. 5, oder auch im Bereich des Seitengetriebes 21, vgl. Fig. 6.

Zusätzlich zu einer solchen Durchtriebswelle 26, mittels derer Antriebsleistung am ersten Arbeitsaggregat vorbei bzw. hindurch zu einem zweiten Arbeitsaggregat übertragen werden kann, kann der Antriebsstrang 14 aber auch eine Verzweigung vor dem genannten ersten Arbeitsaggregat umfassen und/oder eine zweite, separate Antriebswelle 30 besitzen, die von der Riemenstufe 17 angetrieben werden kann.

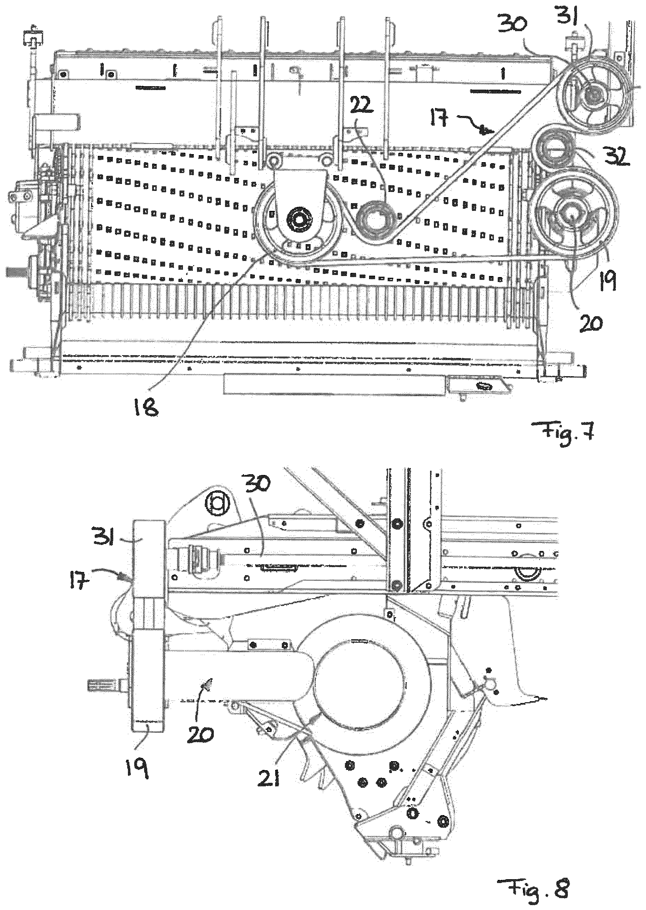

Wie Fig. 7 zeigt, kann die Riemenstufe 17 insbesondere zwei abtreibende Riemenscheiben umfassen, um die die Riemen der Riemenstufe 17 nacheinander umlaufen. Die zusätzliche Riemenscheibe 31 kann eine zweite Abtriebswelle 30 antreiben, die an dem genannten Seitengetriebe 21 vorbei und damit am ersten Arbeitsaggregat vorbei zum zweiten Arbeitsaggregat führen kann, insbesondere zu dem genannten Dosierer 13.

Wie Fig. 7 zeigt, können die beiden abtreibenden Riemenscheiben 19 und 31 beide an einer Seite der Erntemaschine 1 und/oder übereinander angeordnet sein und um zueinander parallele Drehachsen umlaufen. Vorteilhafterweise kann zwischen den beiden abtreibenden Riemenscheiben 31 eine Umlenkscheibe 32 vorgesehen sein, um an beiden Riemenscheiben 19 und 31 einen ausreichenden Umschlingungswinkel und damit eine ausreichende Riemenspannung um die Scheiben herum sicherzustellen.

Wie Fig. 8 zeigt, kann die zusätzliche Antriebswelle 30 beispielsweise im Bereich des Maschinenrahmens 3 an diesem entlang oberhalb des Seitengetriebes 21 zum Dosierer 13 geführt sein.

Eine solche zusätzliche Antriebswelle 30 zum Antreiben eines weiteren Arbeitsaggregats kann auch mittels einer zusätzlichen zweiten Riemenstufe 33 angetrieben werden, die direkt an die Gelenkwelle 15 bzw. das davon angetriebene Antriebselement 16 angebunden sein kann, insbesondere aber auch von der ersten Riemenstufe 17 angetrieben werden kann.

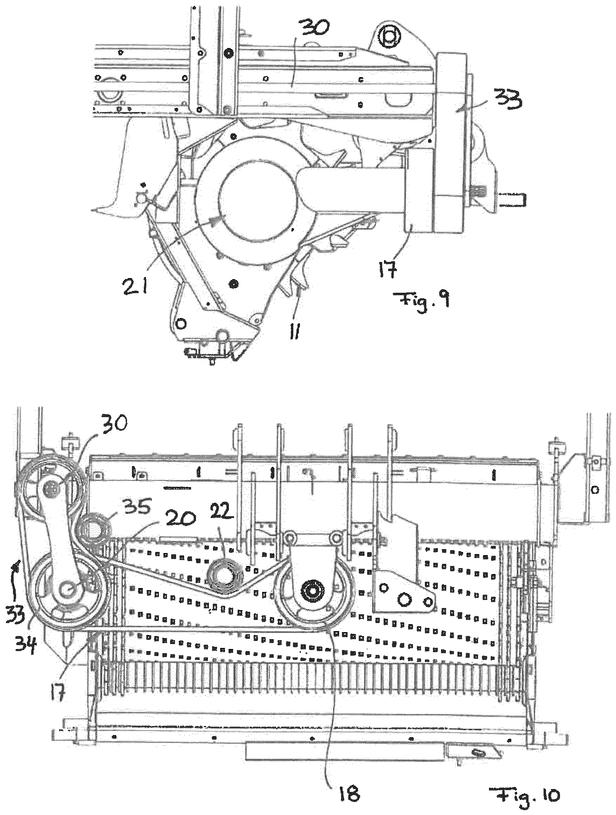

Wie die Figuren 9 und 10 zeigen, kann die zweite Riemenstufe 33 eine antreibende Riemenscheibe 34 umfassen, die von der abtreibenden Riemenscheibe 19 der ersten Riemenstufe 17 angetrieben wird. Beispielsweise können die beiden genannten Riemenscheiben 34 und 19 koaxial zueinander auf der Abtriebswelle sitzen, die von der Riemenscheibe 19 angetrieben wird und zu dem Seitengetriebe 21 führt.

Die genannte zweite Riemenstufe 33 kann sich insbesondere an einer linken oder rechten Seite der Erntemaschine 21 erstrecken, wobei sich die beiden Riemenscheiben der zweiten Riemenstufe 33 beispielsweise - zumindest näherungsweise - übereinander erstrecken können, wobei die zweite Riemenstufe 33 beispielsweise vom abtreibenden Ende der ersten Riemenstufe 17 nach oben führen kann.

Wie Fig. 10 zeigt, kann auch die zweite Riemenstufe 33 einen Riemenspanner 35 umfassen, der in ähnlicher oder entsprechender Weise wie der Riemenspanner der ersten Riemenstufe 17 verstellt werden kann, insbesondere abhängig von einem Drehmoment und/oder einer Belastung und/oder einem Schlupf. Über den Riemenspanner 35 kann die zweite Riemenstufe 33 und damit das daran angebundene weitere Arbeitsaggregat unabhängig vom Betrieb des ersten Arbeitsaggregats stillgesetzt werden.

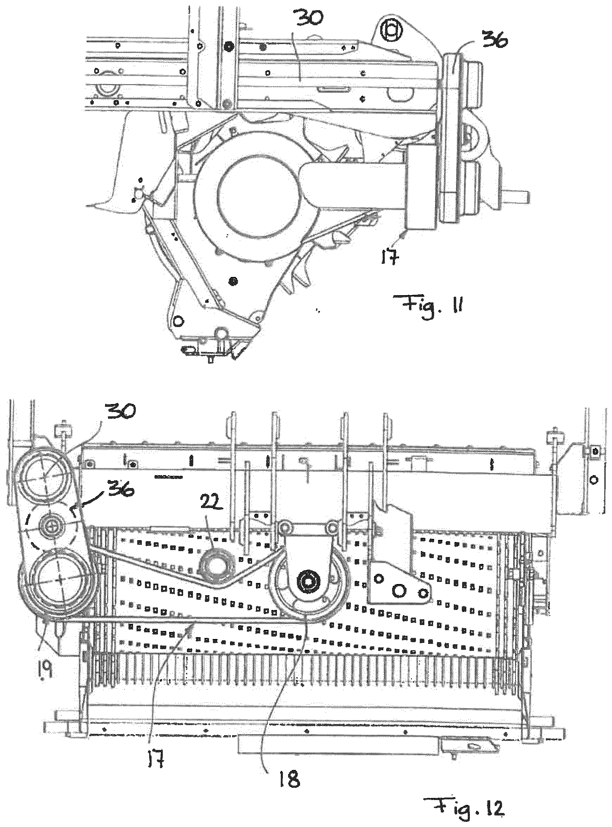

Wie die Figuren 11 und 12 zeigen, kann die genannte weitere Antriebswelle 30 zum Antreiben des weiteren Arbeitsaggregats auch über eine zusätzliche Stirnradstufe bzw. ein zusätzliches Stirnradgetriebe 36 angetrieben werden, wobei ein solches Stirnradgetriebe 36 zwischen der abtreibenden Riemenscheibe 19 bzw. der davon angetriebenen Abtriebswelle und der genannten weiteren Antriebswelle 30 vorgesehen sein kann. Beispielsweise kann das genannte Stirnradgetriebe 36 einen Satz von miteinander kämmenden oder aufeinander abwälzenden Stirnrädern umfassen, um die Beabstandung der beiden Wellen zu überbrücken.

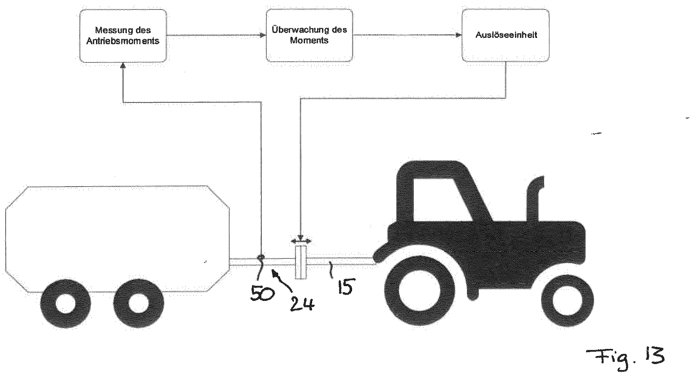

Um auf Überlastsituationen ausreichend schnell reagieren zu können, kann es vorteilhaft sein, die auf den Antriebsstrang wirkende Last und/oder das dort auftretende Drehmoment mittels DMS-Technik am Antriebsstrang zu messen, wie dies Fig. 13 zeigt, wobei beispielsweise ein Dehnungsmessstreifen 50 an der Antriebswelle 15 des Antriebsstrangs 14, der zum Schlepper führt, oder an einer anderen Antriebswelle und/oder an einer Komponente, die Reaktionskräfte des im Antriebsstrang wirkenden Drehmoments und/oder der im Antriebsstrang wirkenden Last abstützt, angebracht werden kann. Eine solche Komponente kann beispielsweise ein Drehlager sein, welches einen Antriebswellenteil abstützt und Reaktionskräfte einer Verzahnungsstufe und/oder des Riemenspanners 22 abfängt. Alternativ oder zusätzlich kann die genannte Lasterfassungseinrichtung 24 auch einen Kraftmessbolzen umfassen, der die Riemenscheibe 18 oder 22 oder ein Kettenrad einer Riemen- oder Kettenstufe drehbar lagert und gleichzeitig die über den Riemen 17 oder die Kette übertragene Kraft misst.

Insbesondere ist die Lasterfassungseinrichtung 24, beispielsweise in Form des zumindest einen Dehnungsmessstreifens 50 oder des Kraftmessbolzens derart angeordnet und/oder einer Antriebsstrangkomponente derart zugeordnet, dass die gemessene Größe zumindest näherungsweise proportional zum Antriebsmoment und/oder der auf den Antriebsstrang 14 wirkenden Last ist.

Die Auswertung des Messsignales kann digital oder analog erfolgen. Beispielsweise kann das Messsignal von der elektronischen Steuereinrichtung 23, beispielsweise einem am Anbaugerät vorhandenen Jobrechner, ausgewertet, insbesondere auf Erreichen und/oder Überschreiten eines Schwellwerts überprüft werden, sodass die elektronische Steuereinrichtung bei Feststellen einer Überlastsituation auf Basis des Messsignals ein Unterbrechen des Antriebsstrangs veranlassen kann.

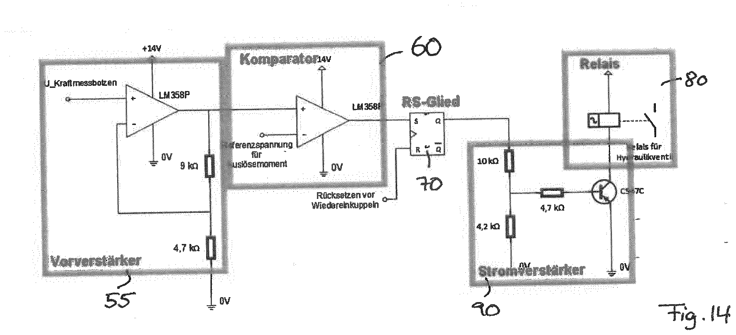

Gegebenenfalls kann aber auch eine analoge Auswertung des Messsignals erfolgen, was gegebenenfalls noch schneller sein kann als die Auswertung durch eine elektronische Steuereinrichtung. Beispielsweise kann das Messsignal des Dehnungsmessstreifens 50 und/oder des Kraftmessbolzens in einen Komparator 60 gegeben werden, der eine Messsignalspannung mit einer Referenzspannung vergleichen kann, wobei die Referenzspannung des Komparators 60 vorteilhafterweise von einer Steuereinrichtung, beispielsweise dem Jobrechner vorgegeben bzw. variiert werden kann, um das Auslösemoment bzw. die Auslöselast variabel festlegen zu können, vgl. Fig. 14.

Gegebenenfalls kann das Messsignal des Dehnungsmessstreifens und/oder des Kraftmessbolzens durch einen Vorverstärker 55 gegeben werden, bevor es in den Komparator 60 geleitet wird, um den Komparator 60 in einen funktionellen Arbeitspunkt betreiben zu können, vgl. Fig. 14.

Dem Komparator 60 kann beispielsweise ein RS-Glied 70 nachgeordnet sein, vgl. Fig. 14 um bei einem einmaligen Überschreiten des maximalen Moments eine dauerhafte Bestromung eines nachgeordneten Relais 80 zu erzielen, das dann die Trennung des Antriebsstrangs bzw. dessen Unterbrechung veranlasst. Vorteilhafterweise kann dem genannten Relais ein Stromverstärker 90 beispielsweise in Form eines Bipolartransistors zugeordnet bzw. vorgeschaltet sein, um das vom Komparator bzw. RS-Glied her kommende Schaltsignal verstärkt auf das Relais durchschalten zu können.

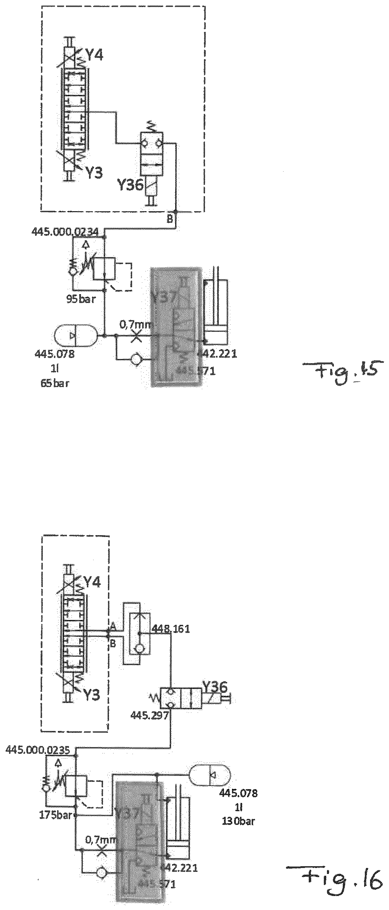

Um den Schaltvorgang selbst, welcher den Drehmoment- bzw. Kraftfluss des Antriebsstrangs 14 unterbricht, rasch umsetzen zu können, kann es vorteilhaft sein, einen Hydraulikaktor 65 zu verwenden, der in einem druckbeaufschlagten Zustand den Drehmoment- und/oder Kraftfluss im Antriebsstrang sicherstellt, beispielsweise die genannte Riemenstufe schließt bzw. spannt, und dem Hydraulikaktor 65 ein Schaltventil 66 zuzuordnen, welches es ermöglicht, den Hydraulikaktor 65 rasch drucklos zu schalten und/oder dem Druckaktor rasch das Abströmen des Druckfluids zu ermöglichen. Das genannte Schaltventil 66 kann auf ein Schaltsignal der elektronischen Steuereinrichtung und/oder des analogen Schaltkreises rasch reagieren bzw. schlagartig öffnen, sodass der Hydraulikaktor sehr rasch drucklos geschaltet wird und Druckfluid abströmen kann, wodurch der Antriebsstrang unterbrochen wird, vgl. Fig. 15 und Fig. 16.

Wie Fig. 15 zeigt, kann der Hydraulikaktor 65 einfach wirkend sein. Hier wird der Zylinder nur auf der Kolbenseite mit Öl beaufschlagt. Die Rückstellung in die Ausgangsposition erfolgt mittels Zugfeder parallel zum Zylinder. Das Ventil öffnet bei Bestromung die Verbindung zwischen Zylinder und Tank. Der Rest der Schaltung wird abgetrennt und der Speicher kann kein Öl mehr in den Kolbenraum des Zylinders nachdrücken. Das Ventil wird von der beschriebenen Elektronikschaltung angesteuert.

Wie Fig. 16 zeigt, kann der Hydraulikaktor 65 aber auch doppeltwirkend sein. Bei dieser Schaltung wird die Kolben- mit der Ringseite des Zylinders verbunden und die Stangenfläche bleibt als Wirkfläche für die Kraftaufbringung. Wie bei der einfach wirkenden Variante trennt auch hier das Wegeventil den Hydraulikstrang vom Zylinder und ermöglicht ein schnelles Abfließen des Öls aus der Kolbenseite des Zylinders. Da bei dieser Variante keine Feder verbaut ist, drückt der Speicher auf der Ringseite des Zylinders und bewegt diesen in die Ausgangsposition.

Der genannte Hydraulikaktor kann insbesondere dem zuvor erläuterten Riemenspanner zugeordnet sein, um diesen in die spannende Stellung zu treiben. Wird das Schaltventil in einer Überlastsituation betätigt, wird der Hydraulikaktor, beispielsweise in Form eines Hydraulikzylinders, kraftlos und die Riemenspannung geht schlagartig zurück, sodass der Riementrieb durchrutschen kann. Grundsätzlich ist es aber auch denkbar, den genannten Hydraulikaktor zum Spannen bzw. Einrücken einer mechanischen Kupplung beispielsweise in Form einer Reibkupplung zu verwenden, um beim Lösen eine solche mechanische Kupplung zu trennen. Grundsätzlich ist die beschriebene elektrische Überlastsicherung auch unabhängig der beschriebenen Riemenantriebsstufe sinnvoll einsetzbar, um in Überlastsituationen sehr rasch den Antriebsstrang zu unterbrechen.

## Patentansprüche

1. Landwirtschaftliche Erntemaschine, insbesondere Ladewagen, mit zumindest einem Arbeitsaggregat, das über einen Antriebsstrang (14) von einem Schlepper (5) her antreibbar ist, wobei der Antriebsstrang (14) ein eingangsseitiges, zentrales Antriebselement (16), das von einer an den Schlepper (5) ankuppelbaren Gelenkwelle (15) antreibbar ist, sowie zumindest eine Riemenstufe (17; 33) umfasst, die sich quer zur Fahrtrichtung (37) und quer zur Gelenkwelle (15) erstreckt, **dadurch gekennzeichnet, dass** die genannte Riemenstufe (17) zumindest näherungsweise die halbe Maschinenbreite der Erntemaschine überbrückt und sich von dem genannten zentralen Antriebselement (16) zu einer Getriebeeingangswelle (20) einer seitlich an der Erntemaschine angeordneten Winkelgetriebestufe (21) erstreckt, die eine sich liegend quer zur Fahrtrichtung erstreckende Abtriebswelle zum Antreiben eines Arbeitsaggregats sowie einen Durchtrieb zum Antreiben eines weiteren Arbeitsaggregats aufweist, wobei die genannte Riemenstufe (17) einen aktiv verstellbaren Riemenspanner (22) umfasst, der von einer Steuervorrichtung (23) zur Überlastsicherung zwischen einer Spannstellung, in der die Riemenstufe (17) Drehmoment zu der Winkelgetriebestufe überträgt und einer Entspannstellung, in der die Riemenstufe (17) den Antriebsstrang (14) von der Gelenkwelle (15) abkoppelt, verstellbar ist.

2. Landwirtschaftliche Erntemaschine nach dem vorhergehenden Anspruch, wobei sich die Riemenstufe (17) in einer aufrechten Ebene quer zur Fahrtrichtung (37) erstreckt und um zumindest zwei Riemenscheiben (18, 19) mit zumindest näherungsweise fahrtrichtungsparallelen Drehachsen umläuft, von denen eine etwa mittig und eine andere seitlich an der Erntemaschine (1) angeordnet ist.

3. Landwirtschaftliche Erntemaschine nach einem der vorhergehenden Ansprüche, wobei eine Drehzahl der antreibenden Riemenscheibe (18) der Riemenstufe (17) der Drehzahl der Gelenkwelle (15) entspricht, wobei die genannte antreibende Riemenscheibe (18) koaxial zu dem endseitigen Endstück der Gelenkwelle (15) angeordnet ist und auf dem Antriebselement (16) drehfest sitzt.

4. Landwirtschaftliche Erntemaschine nach einem der vorhergehenden Ansprüche, wobei eine Verbindungsachse zwischen den beiden Riemenscheiben (18, 19) der Riemenstufe (17) liegend ausgerichtet ist und/oder die beiden Riemenscheiben (18, 19) näherungsweise auf derselben Höhe angeordnet sind.

5. Landwirtschaftliche Erntemaschine nach einem der vorhergehenden Ansprüche, wobei eine Lasterfassungseinrichtung (24) zum Erfassen eines Drehmoments und/oder einer Belastung des Antriebsstrangs (14) und/oder eines davon angetriebenen Arbeitsaggregats vorgesehen ist und die Steuervorrichtung (23) dazu ausgebildet ist, in Abhängigkeit eines Lastsignals der Lasterfassungseinrichtung (24), das das Erreichen und/oder Überschreiten eines Lastschwellwerts anzeigt, den Riemenspanner (22) in seine Entspannstellung zu verstellen.

6. Landwirtschaftliche Erntemaschine nach dem vorhergehenden Anspruch, wobei die Lasterfassungseinrichtung (24) dazu ausgebildet ist, eine Lagerabstützkraft und/oder ein Lagerabstützmoment an zumindest einer der Riemenscheiben (18, 19) der Riemenstufe (17) zu erfassen.

7. Landwirtschaftliche Erntemaschine nach einem der beiden vorhergehenden Ansprüche, wobei zumindest eine der Riemenscheiben (18, 19) auf einer Wippe oder einem Schwenkarm beweglich gelagert ist, und die Lasterfassungseinrichtung (24) einen Kraftmesser und/oder Wegmesser zum Messen einer auf die Wippe oder den Schwenkarm, wirkenden Auslenkkraft und/oder eines Auslenkwegs der genannten Wippe oder des genannten Schwenkarms aufweist.

8. Landwirtschaftliche Erntemaschine nach einem der vorhergehenden Ansprüche, wobei eine Schlupferfassungseinrichtung (24) zum Erfassen eines Schlupfs der Riemenstufe (17) vorgesehen ist und die Steuereinrichtung (23) dazu ausgebildet ist, in Abhängigkeit eines Schlupfsignals der Schlupferfassungseinrichtung (38), das das Erreichen und/oder Überschreiten eines Schlupfschwellwerts anzeigt, den Riemenspanner (22) in seine Entspannstellung zu verfahren, wobei die Schlupferfassungseinrichtung (38) zwei Drehzahlsensoren zum Erfassen der Drehzahlen der antreibenden Riemenscheibe (18) und der abtreibenden Riemenscheibe (19) der Riemenstufe (17) aufweist, wobei die Steuervorrichtung (23) dazu ausgebildet ist, den Riemenspanner (22) bei Überschreiten einer vorbestimmten Drehzahldifferenz in seine Entspannstellung zu verfahren.

9. Landwirtschaftliche Erntemaschine nach einem der vorhergehenden Ansprüche, wobei die Riemenstufe (17) zumindest zwei abtreibende Riemenscheiben (19, 31) umfasst, die zwei separate, voneinander beabstandete Antriebswellen (20; 30) zum Antreiben zweier separater Arbeitsaggregate antreiben, wobei um die beiden genannten abtreibenden Riemenscheiben (19, 31) derselbe Riemen der Riemenstufe (17) umläuft, wobei die beiden abtreibenden Riemenscheiben (19, 31) auf derselben Seite der Erntemaschine angeordnet, insbesondere übereinander gestapelt sind und jeweils um zumindest näherungsweise fahrtrichtungsparallele Drehachsen umlaufen.

10. Landwirtschaftliche Erntemaschine nach dem vorhergehenden Anspruch, wobei zwischen den beiden abtreibenden Riemenscheiben (19, 31) zumindest eine Umlenkscheibe (32) angeordnet ist derart, dass der Riemen der Riemenstufe (17) S-förmig oder schlangenförmig um die beiden abtreibenden Riemenscheiben (19, 31) und die dazwischen angeordnete Umlenkscheibe (32) umläuft.

11. Landwirtschaftliche Erntemaschine nach einem der vorhergehenden Ansprüche, wobei zusätzlich zu der genannten Riemenstufe (17) eine zweite Riemenstufe (33) vorgesehen ist, wobei die beiden Riemenstufen (17, 33) zwei separate Antriebswellen (20, 30) antreiben, die sich zueinander parallel und zumindest näherungsweise fahrtrichtungsparallel erstrecken, wobei die zusätzliche Riemenstufe (33) von der erstgenannten Riemenstufe (17) antreibbar ist, wobei eine antreibende Riemenscheibe (34) der zusätzlichen zweiten Riemenstufe (33) drehfest, insbesondere koaxial mit der abtreibenden Riemenscheibe (19) der ersten Riemenstufe (17) verbunden ist, wobei die Riemenscheiben (34, 35) der zusätzlichen zweiten Riemenstufe (33) übereinander an derselben Seite der Erntemaschine angeordnet sind.

12. Landwirtschaftliche Erntemaschine nach einem der vorhergehenden Ansprüche, wobei das genannte Winkelgetriebe (21) eine Durchtriebswelle (26) aufweist, die durch das Winkelgetriebe hindurchgeht und eingangsseitig von der Riemenstufe (17) antreibbar ist und abtriebsseitig zum Antreiben eines weiteren Arbeitsaggregats, insbesondere eines Dosierers, ausgebildet ist.

13. Landwirtschaftliche Erntemaschine nach einem der vorhergehenden Ansprüche 1 bis 11, wobei der Durchtrieb des Winkelgetriebes (21) von einer separaten Eingangswelle und einer separaten Ausgangswelle gebildet wird, die jeweils mit einem Getriebeelement (27), insbesondere einem Tellerrad, in Antriebseingriff stehen, das um eine Drehachse quer zu den beiden Wellen umläuft und das genannte Arbeitsaggregat antreibt.

14. Landwirtschaftliche Erntemaschine nach einem der vorhergehenden Ansprüche, wobei als Arbeitsaggregate zumindest eine Aufsammelvorrichtung (12) mit einem um eine liegende, quer zur Fahrtrichtung ausgerichtete Achse umlaufenden Förderrotor (11) sowie ein Dosierer (13) vorgesehen sind, die beide über die genannte zumindest eine Riemenstufe (17) antreibbar sind.

## Claims

1. Agricultural harvesting machine, in particular a loader wagon, comprising at least one working unit, which can be driven by means of a drive train (14) from a tractor (5), wherein the drive train (14) comprises an input-side, central drive element (16), which can be driven by a jointed shaft (15) that can be coupled to the tractor (5), and comprises at least one belt stage (17; 33), which extends transversely to the travel direction (37) and transversely to the jointed shaft (15), **characterised in that** said belt stage (17) at least approximately spans half the machine width of the harvesting machine and extends from said central drive element (16) to a gearbox input shaft (20) of an angular gear stage (21) which is arranged laterally in the harvesting machine and comprises an output shaft extending horizontally transversely to the travel direction for driving a working unit and a through-drive for driving another working unit, wherein said belt stage (17) comprises an actively adjustable belt tensioner (22), which is adjustable by a control device (23) for overload protection between a tensioned position, in which the belt stage (17) transmits torque to the angular gear stage, and an untensioned position, in which the belt stage (17) uncouples the drive train (14) from the jointed shaft (15).

2. Agricultural harvesting machine according to the preceding claim, wherein the belt stage (17) extends transversely to the travel direction (37) in a vertical plane and revolves around at least two belt pulleys (18, 19) having rotational axes that are at least approximately in parallel with the travel direction, one of which is arranged approximately centrally on the harvesting machine (1) and the other is arranged laterally in said harvesting machine.

3. Agricultural harvesting machine according to any of the preceding claims, wherein a speed of the driving belt pulley (18) of the belt stage (17) corresponds to the speed of the jointed shaft (15), wherein said driving belt pulley (18) is arranged coaxially with the end-side end piece of the jointed shaft (15) and is positioned on the drive element (16) for conjoint rotation.

4. Agricultural harvesting machine according to any of the preceding claims, wherein a connecting axis between the two belt pulleys (18, 19) of the belt stage (17) is oriented so as to be horizontal and/or the two belt pulleys (18, 19) are arranged at approximately the same height.

5. Agricultural harvesting machine according to any of the preceding claims, wherein a load-detection apparatus (24) is provided for detecting a torque and/or a load on the drive train (14) and/or a working unit driven thereby and the control device (23) is configured to move the belt tensioner (22) into its untensioned position on the basis of a load signal from the load-detection apparatus (24) which indicates that a load threshold value has been reached and/or exceeded.

6. Agricultural harvesting machine according to the preceding claim, wherein the load-detection apparatus (24) is configured to detect a bearing support force and/or a bearing support torque on at least one of the belt pulleys (18, 19) of the belt stage (17).

7. Agricultural harvesting machine according to any of the two preceding claims, wherein at least one of the belt pulleys (18, 19) is movably mounted on a rocker or a pivot arm and the load-detection apparatus (24) comprises a forcemeasuring device and/or displacement sensor for measuring a deflection force and/or deflection displacement of the rocker or pivot arm acting on said rocker or pivot arm.

8. Agricultural harvesting machine according to any of the preceding claims, wherein a slip-detection apparatus (24) is provided for detecting slip of the belt stage (17) and the control device (23) is configured to move the belt tensioner (22) into its untensioned position on the basis of a slip signal from the slip-detection apparatus (38) which indicates that a slip threshold value has been reached and/or exceeded, wherein the slip-detection apparatus (38) comprises two speed sensors for detecting the speeds of the driving belt pulley (18) and the outputting belt pulley (19) of the belt stage (17), wherein the control device (23) is configured to move the belt tensioner (22) into its untensioned position when a predetermined speed difference is exceeded.

9. Agricultural harvesting machine according to any of the preceding claims, wherein the belt stage (17) comprises at least two outputting belt pulleys (19, 31) which drive two separate, spaced-apart drive shafts (20; 30) for driving two separate working units, wherein the same belt of the belt stage (17) revolves around both of said outputting belt pulleys (19, 31), wherein both outputting belt pulleys (19, 31) are arranged on the same side of the harvesting machine, are in particular stacked one above the other and each revolve around rotational axes that are at least approximately in parallel with the travel direction.

10. Agricultural harvesting machine according to the preceding claim, wherein at least one idler pulley (32) is arranged between the two outputting belt pulleys (19, 31) such that the belt of the belt stage (17) revolves in an S shape or a serpentine manner around the two outputting belt pulleys (19, 31) and the idler pulley (32) arranged therebetween.

11. Agricultural harvesting machine according to any of the preceding claims, wherein in addition to said belt stage (17), a second belt stage (33) is provided, wherein the two belt stages (17, 33) drive two separate drive shafts (20, 30), which extend in parallel with one another and at least approximately in parallel with the travel direction, wherein the additional belt stage (33) can be driven by the first-mentioned belt stage (17), wherein a driving belt pulley (34) of the additional second belt stage (33) is connected, in particular coaxially, to the outputting belt pulley (19) of the first belt stage (17) for conjoint rotation, wherein the belt pulleys (34, 35) of the additional second belt stage (33) are arranged one above the other on the same side of the harvesting machine.

12. Agricultural harvesting machine according to any of the preceding claims, wherein said angular gear (21) comprises a through-drive shaft (26), which extends through the angular gear and can be driven by the belt stage (17) on the input side and is configured to drive another working unit, in particular a metering unit, on the output side.

13. Agricultural harvesting machine according to any of the preceding claims 1 to 11, wherein the through-drive of the angular gear (21) is formed by a separate input shaft and a separate output shaft, which are each in driving engagement with a gearbox element (27), in particular a ring gear, which revolves around a rotational axis transversely to the two shafts and drives said working unit.

14. Agricultural harvesting machine according to any of the preceding claims, wherein at least one collection device (12), which comprises a feed rotor (11) revolving around a horizontal axis oriented transversely to the travel direction, as well as a metering unit (13), which can both be driven by means of said at least one belt stage (17), are provided as working units.

## Revendications

1. Machine agricole de récolte, en particulier remorque autochargeuse, avec au moins un module de travail, qui peut être entraîné depuis un tracteur (5) par l'intermédiaire d'une chaîne cinématique (14), dans laquelle la chaîne cinématique (14) comprend un élément d'entraînement (16) central côté entrée, qui peut être entraîné par un arbre d'articulation (15) pouvant être accouplé au tracteur (5), ainsi qu'au moins un étage de courroie (17 ; 33), qui s'étend de manière transversale au sens de déplacement (37) et de manière transversale à l'arbre d'articulation (15), **caractérisée en ce que** ledit étage de courroie (17) recouvre au moins approximativement la moitié de la largeur de machine de la machine de récolte et s'étend depuis ledit élément d'entraînement (16) central vers un arbre d'entrée d'engrenage (20) d'un étage à engrenage conique (21) disposé latéralement sur la machine de récolte, qui présente un arbre de sortie s'étendant à l'horizontale de manière transversale au sens de déplacement pour entraîner un module de travail ainsi qu'une prise directe pour entraîner un autre module de travail, dans laquelle ledit étage de courroie (17) comprend un tendeur de courroie (22) pouvant être ajusté activement, qui peut être ajusté par un dispositif de commande (23) pour le blocage de surcharge entre une position de serrage, dans laquelle l'étage de courroie (17) transmet un couple de rotation vers l'étage à engrenage conique, et une position de desserrage, dans laquelle l'étage de courroie (17) découple la chaîne de transmission (14) de l'arbre d'articulation (15).

2. Machine agricole de récolte selon la revendication précédente, dans laquelle l'étage de courroie (17) s'étend dans un plan droit de manière transversale par rapport au sens de déplacement (37) et s'enroule autour d'au moins deux poulies (18, 19) avec des axes de rotation au moins approximativement parallèles au sens de déplacement, dont l'un est disposé à peu près au centre et un autre est disposé latéralement sur la machine de récolte (1).

3. Machine agricole de récolte selon l'une quelconque des revendications précédentes, dans laquelle une vitesse de rotation de la poulie d'entraînement (18) de l'étage de courroie (17) correspond à la vitesse de rotation de l'arbre d'articulation (15), dans laquelle ladite poulie d'entraînement (18) est disposée de manière coaxiale par rapport à la pièce d'extrémité côté extrémité de l'arbre d'articulation (15) et repose de manière solidaire en rotations sur l'élément d'entraînement (16).

4. Machine agricole de récolte selon l'une quelconque des revendications précédentes, dans laquelle un axe de liaison est orienté à l'horizontale entre les deux poulies (18, 19) de l'étage de courroie (17) et/ou les deux poulies (18, 19) sont disposées approximativement sur la même hauteur.

5. Machine agricole de récolte selon l'une quelconque des revendications précédentes, dans laquelle un dispositif de détection de charge (24) est prévu pour détecter un couple de rotation et/ou une contrainte sur la chaîne cinématique (14) et/ou sur un module de travail entraîné par celle-ci, et le dispositif de commande (23) est réalisé pour ajuster en fonction d'un signal de charge du système de détection de charge (24), qui indique l'atteinte et/ou le dépassement d'une valeur de seuil de charge, le tendeur de courroie (22) dans sa position de desserrage.

6. Machine agricole de récolte selon la revendication précédente, dans laquelle le système de détection de charge (24) est réalisé pour détecter une force de soutien de palier et/ou un couple de soutien de palier sur au moins une des poulies (18, 19) de l'étage de poulie (17).

7. Machine agricole de récolte selon l'une quelconque des revendications précédentes, dans laquelle au moins une des poulies (18, 19) est montée de manière mobile sur une bascule ou un bras de pivotement, et le système de détection de charge (24) présente un système de mesure de force et/ou un système de mesure de trajet pour mesurer une force de déviation agissant sur la bascule ou le bras de pivotement et/ou un trajet de déviation de ladite bascule ou dudit bras de pivotement.

8. Machine agricole de récolte selon l'une quelconque des revendications précédentes, dans laquelle un système de détection de patinage (24) est prévu pour détecter un patinage de l'étage de courroie (17) et le système de commande (23) est réalisé pour déplacer en fonction d'un signal de patinage du système de détection de patinage (38), qui indique l'atteinte et/ou le dépassement d'une valeur de seuil de patinage, le tendeur de courroie (22) dans sa position de desserrage, dans laquelle le système de détection de patinage (38) présente deux capteurs de vitesse de rotation pour détecter les vitesses de rotation de la poulie d'entraînement (18) et de la poulie menée (19) de l'étage de courroie (17), dans laquelle le dispositif de commande (23) est réalisé pour déplacer le tendeur de courroie (22) lors du dépassement d'une différence de vitesse de rotation prédéfinie dans sa position de desserrage.

9. Machine agricole de récolte selon l'une quelconque des revendications précédentes, dans laquelle l'étage de courroie (17) comprend au moins deux poulies menées (19, 31), qui entraînent deux arbres d'entraînement (20 ; 30) séparés tenus à distance l'un de l'autre pour entraîner deux modules de travail séparés, dans laquelle la même courroie de l'étage de courroie (17) circule autour desdites deux poulies menées (19, 31), dans laquelle les deux poulies menées (19, 31) sont disposées, en particulier sont empilées l'une sur l'autre sur le même côté de la machine de récolte et circulent respectivement autour d'axes de rotation au moins approximativement parallèles au sens de déplacement.

10. Machine agricole de récolte selon la revendication précédente, dans laquelle au moins une poulie de renvoi (32) est disposée de telle manière entre les deux poulies menées (19, 31) que la courroie de l'étage de courroie (17) circule en forme de S ou en forme de serpent autour des deux poulies menées (19, 31) et des poulies de renvoi (32) disposées de manière intercalée.

11. Machine agricole de récolte selon l'une quelconque des revendications précédentes, dans laquelle en supplément dudit étage de courroie (17), un deuxième étage de courroie (33) est prévu, dans laquelle les deux étages de courroie (17, 33) entraînent deux arbres d'entraînement (20, 30) séparés qui s'étendent de manière parallèle l'un par rapport à l'autre et au moins approximativement de manière parallèle au sens de déplacement, dans laquelle l'étage de courroie (33) supplémentaire peut être entraîné par l'étage de courroie (17) mentionné en premier lieu, dans laquelle une poulie d'entraînement (34) du deuxième étage de courroie (33) supplémentaire est reliée de manière solidaire en rotation, en particulier de manière coaxiale avec la poulie menée (19) du premier étage de courroie (17), dans laquelle les poulies (34, 35) du deuxième étage de courroie (33) supplémentaire sont disposées les unes au-dessus des autres sur le même côté de la machine de récolte.

12. Machine agricole de récolte selon l'une quelconque des revendications précédentes, dans laquelle ledit engrenage conique (21) présente un arbre de prise directe (26), qui traverse l'engrenage conique et peut être entraîné côté entrée par l'étage de courroie (17) et est réalisé côté sortie pour entraîner un autre module de travail, en particulier un doseur.

13. Machine agricole de récolte selon l'une quelconque des revendications précédentes 1 à 11, dans laquelle la prise directe de l'engrenage conique (21) est formée par un arbre d'entrée séparé et un arbre de sortie séparé, qui sont en prise d'entraînement respectivement avec un élément d'engrenage (27), en particulier une couronne dentée, qui circule autour d'un axe de rotation de manière transversale par rapport aux deux arbres et entraîne ledit module de travail.

14. Machine agricole de travail selon l'une quelconque des revendications précédentes, dans laquelle sont prévus en tant que modules de travail au moins un dispositif de collecte (12) avec un rotor de refoulement (11) circulant autour d'un axe horizontal orienté de manière transversale par rapport au sens de déplacement, ainsi qu'un doseur (13), lesquels peuvent être entraînés tous deux par l'intermédiaire dudit au moins un étage de courroie (17).
